# EUROPEAN PATENT APPLICATION

(11) **EP 4 564 557 A1**
(43) Date of publication of application: **04.06.2025**
(21) Application number: 23870856.4
(22) Date of filing: 26.09.2023
(51) Int. Cl.: H01M 50/244, H01M 50/271, H01M 10/613, H01M 10/625, H01M 10/6554, H01M 10/6568, H01M 50/103, H01M 50/172, H01M 50/188, H01M 50/298

(54) **BATTERY, BATTERY MODULE, AND VEHICLE HAVING BATTERY MODULE**

(30) Priority: 30.09.2022 CN 202211218106; 08.12.2022 CN 202211572112
(71) Applicant: Deepal Automobile Technology Co., Ltd., Chongqing 401133 (CN)
(72) Inventor: YI, Bingxi, Chongqing 401135 (CN); YUAN, Changrong, Chongqing 401135 (CN); ZHANG, Song, Chongqing 401135 (CN); YANG, Wen, Chongqing 401135 (CN); ZHENG, Jie, Chongqing 401135 (CN)
(74) Representative: DREISS Patentanwälte PartG mbB
(86) International application number: PCT/CN2023/121707
(87) International publication number: WO 2024/067628

(57) **Abstract**

A battery, a battery module, and a vehicle having the battery module. The battery includes: a housing (1) and an end cap (2). An accommodating cavity suitable for accommodating an electrode sheet is formed in the housing (1); at least one end of the housing (1) is open; the end cap (2) is provided on the housing (1) and seals the open end of the housing (1); first contact portions (3) extending towards the accommodating cavity are formed on the side of the end cap (2) facing the accommodating cavity, and second contact portions (4) extending away from the accommodating cavity are formed on the side of the end cap (2) facing away from the accommodating cavity; and the first contact portions (3), the second contact portions (4), and the end cap (2) are configured as an integral piece.

## Description

### CROSS-REFERENCE TO RELATED APPLICATIONS

This application claims priorities to Chinese patent application No. 202211218106.X filed on September 9, 2022, and Chinese patent application No. 202211572112.5 filed on December 8, 2022, both titled "BATTERY, BATTERY MODULE, AND VEHICLE HAVING BATTERY MODULE", the entire contents of which are incorporated herein by reference.

### TECHNICAL FIELD

The present disclosure relates to the field of battery, and in particular to a battery, a battery module, and a vehicle having the battery module.

### BACKGROUND

With the rapid development of the new energy industry, the demand for lithium batteries is increasing, which puts forward higher requirements for the structure, safety, and the space utilization rate of batteries. The main traction batteries on the current market include soft pack batteries, cylindrical batteries, and prismatic batteries. The soft pack batteries are connected with a tab by a lead-out sheet for current conduction, and are packaged through heat sealing with an aluminum-plastic film. Pole cores of the cylindrical batteries are embedded in a cylindrical shell, a positive tab and a negative tab of the cylindrical batteries are connected with a pole on a top cap, respectively, and a cover plate and the cylindrical shell are sealed through welding. The cover plate and the housing of the battery are in a conductive state. The cover plate needs to be insulated from the pole and connected to the pole. Pole cores of the prismatic batteries are embedded in a prismatic housing, a positive tab and a negative tab of the prismatic batteries are connected with a pole on a top cap, respectively, and the cover plate and the prismatic housing are sealed through welding. The cover plate and the housing are in a conductive state, and the cover plate needs to be insulated from the pole and connected to the pole.

In the related art, the cover plate and the pole of the battery need to be insulated from each other and connected to each other, which results in a complicated structure and processing technology, and thus a high cost. When the cylindrical batteries are stacked, the space may be wasted and the battery energy density may be reduced. In addition, when a gas is produced inside the battery and causes swelling, non-uniform deformation of the battery housing may occur with a large deformation amount.

### SUMMARY

The present disclosure aims to solve at least one of the technical problems in the related art to some extent.

To this end, an object of the present disclosure is to provide a battery that is capable of simplifying a structure between a cover plate and a pole of the battery and a processing technology to prolong a service life of the battery.

Another object of the present disclosure is to provide a battery module including the above battery.

The other object of the present disclosure is to provide a vehicle including the above battery module.

A battery is provided according to the present disclosure. The battery includes a housing and an end cap. The housing defines a receiving cavity configured to receive an electrode sheet, and has at least one open end. The end cap is disposed on the housing and closes the at least one open end of the housing. The end cap is provided with a first contact portion at a side of the end cap facing towards the receiving cavity and a second contact portion at a side of the end cap away from the receiving cavity. The first contact portion extends towards the receiving cavity, and the second contact portion extends away from the receiving cavity. The first contact portion is adapted to be electrically connected to the electrode sheet. The second contact portion is constructed as a pole of the battery. The first contact portion, the second contact portion, and the end cap are constructed as an integral piece.

With the battery according to the embodiment of the present disclosure, the first contact portion, the second contact portion, and the end cap are constructed as the integral piece, such that the first contact portion can be electrically connected to the electrode sheet to draw current to allow the end cap to be directly charged, and the second contact portion can be configured as the pole of the battery. Compared with the related art, there is no need to design an insulating connection between the cover plate and the pole of the battery, simplifying the structure of the cover plate and the manufacturing process, and thus reducing an economic cost.

In addition, the battery according to the above embodiment of the present disclosure can further have the following additional technical features.

According to an embodiment of the present disclosure, an insulator is provided between the end cap and the housing to insulate the end cap from the housing.

According to an embodiment of the present disclosure, the first contact portion extends in a radial direction of the end cap.

According to an embodiment of the present disclosure, a plurality of first contact portions is provided and arranged at intervals in a circumferential direction of the end cap.

According to an embodiment of the present disclosure, the housing is constructed as a hexagonal prism. An end surface of the end cap facing towards the receiving cavity is constructed into a hexagonal shape. An end of each of the plurality of first contact portions extends from a center of the end cap towards an edge or a corner of the end cap.

According to an embodiment of the present disclosure, a cross section of each of the plurality of first contact portions is constructed as an oblong shape.

According to an embodiment of the present disclosure, a projection of the first contact portion in a thickness direction of the end cap interlaces with a projection of the second contact portion in the thickness direction of the end cap.

According to an embodiment of the present disclosure, a plurality of second contact portions is provided, and at least one of the plurality of second contact portions is adapted to be engaged and connected with an electrical connector.

According to an embodiment of the present disclosure, the end cap has a first communication hole extending through the end cap in a thickness direction of the end cap. An on-off valve is provided in the first communication hole. The on-off valve is adapted to bring the receiving cavity into communication with an external environment when a pressure in the receiving cavity is greater than a first predetermined pressure, and to close the first communication hole when the pressure in the receiving cavity is smaller than or equal to the first predetermined pressure.

According to an embodiment of the present disclosure, the end cap has a second communication hole extending through the end cap in a thickness direction of the end cap. An explosion-proof valve is provided in the second communication hole. The explosion-proof valve is adapted to bring the receiving cavity into communication with an external environment when a pressure in the receiving cavity reaches a second predetermined pressure.

According to an embodiment of the present disclosure, the insulator includes a first insulation member and a second insulation member. The first insulation member is disposed at the at least one open end of the housing and at least partially located at an inner circumferential wall of the receiving cavity. The second insulation member is disposed between the first insulation member and the end cap and is at least partially located at an outer circumferential wall of the housing.

A battery module is provided according to the embodiment of the present disclosure. The battery module includes a battery constructed as the battery according to any one of the above embodiments and a casing having a battery receiving cavity. The battery is disposed in the battery receiving cavity.

The battery module according to the above embodiments of the present disclosure can further have the following additional technical features.

According to an embodiment of the present disclosure, the battery module further includes a water-cooling plate attached to the battery. The water-cooling plate has a cooling channel adapted to circulate a cooling medium.

According to an embodiment of the present disclosure, the battery includes a plurality of first batteries and a plurality of second batteries. The plurality of first batteries is sequentially arranged in a first direction to form a first battery group. The plurality of first batteries has first attachment surfaces directly facing towards each other in the first direction, two adjacent first batteries of the plurality of first batteries are attached to each other with the first attachment surfaces, and a second attachment surface is formed between two first attachment surfaces of each of the plurality of first batteries. The plurality of second batteries is sequentially arranged in the first direction to form a second battery group. The plurality of second batteries has third attachment surfaces directly facing towards each other in the first direction, two adjacent second batteries of the plurality of second batteries are attached to each other with the third attachment surfaces, and a fourth attachment surface is formed between two third attachment surfaces of each of the plurality of second batteries. The fourth attachment surface is attached to the second attachment surface in a second direction.

According to an embodiment of the present disclosure, the water-cooling plate is disposed between the first battery group and the second battery group and extends in the first direction, and the water-cooling plate is attached to each of the second attachment surface and the fourth attachment surface. In another embodiment, the water-cooling plate is disposed at an end of the battery, and the cooling channel in the water-cooling plate extends in the first direction and is located between the second attachment surface and the fourth attachment surface.

A vehicle is provided according to an embodiment of the present disclosure. The vehicle includes the battery module according to any one of the above embodiments.

Additional aspects and advantages of the present disclosure will be provided at least in part in the following description, will become apparent at least in part from the following description, or can be learned from practicing of the present disclosure.

### BRIEF DESCRIPTION OF DRAWINGS

FIG. 1 is a front view of a negative cover plate assembly according to an embodiment of the present disclosure.
FIG. 2 is a side view of a negative cover plate assembly according to an embodiment of the present disclosure.
FIG. 3 is a top view of a negative cover plate assembly according to an embodiment of the present disclosure.
FIG. 4 is a front view of a positive cover plate assembly according to an embodiment of the present disclosure.
FIG. 5 is a side view of a positive cover plate assembly according to an embodiment of the present disclosure.
FIG. 6 is a top view of a positive cover plate assembly according to an embodiment of the present disclosure.
FIG. 7 is a front view of a structure of a battery according to an embodiment of the present disclosure.
FIG. 8 is a side view of a structure of a battery according to an embodiment of the present disclosure.
FIG. 9 is a schematic structural view of a battery and a water-cooling plate according to an embodiment of the present disclosure.
FIG. 10 is a structural sectional view of a battery and a water-cooling plate according to an embodiment of the present disclosure.
FIG. 11 is a structural sectional view of a battery and a water-cooling plate according to another embodiment of the present disclosure.
FIG. 12 is a structural sectional view of a battery and a water-cooling plate according to yet another embodiment of the present disclosure.
FIG. 13 is a schematic diagram of a battery module placed into a casing according to an embodiment of the present disclosure.

Reference numerals of the accompanying drawings:
housing 1; end cap 2; first contact portion 3; second contact portion 4; first insulation member 5; second insulation member 6; pole core 7; on-off valve 8; explosion-proof valve 9; liquid injection hole 10; positive tab 11; negative tab 12; casing 13; water-cooling plate 14; first battery 15; second battery 16;
battery receiving cavity 131; cooling channel 141; branch water-cooling plate 142; first water-cooling plate 143; second water-cooling plate 144; third water-cooling plate 145; first attachment surface 151; second attachment surface 152; third attachment surface 161; fourth attachment surface 162.

### DESCRIPTION OF EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative, and are intended to explain, rather than limiting, the embodiments of the present disclosure.

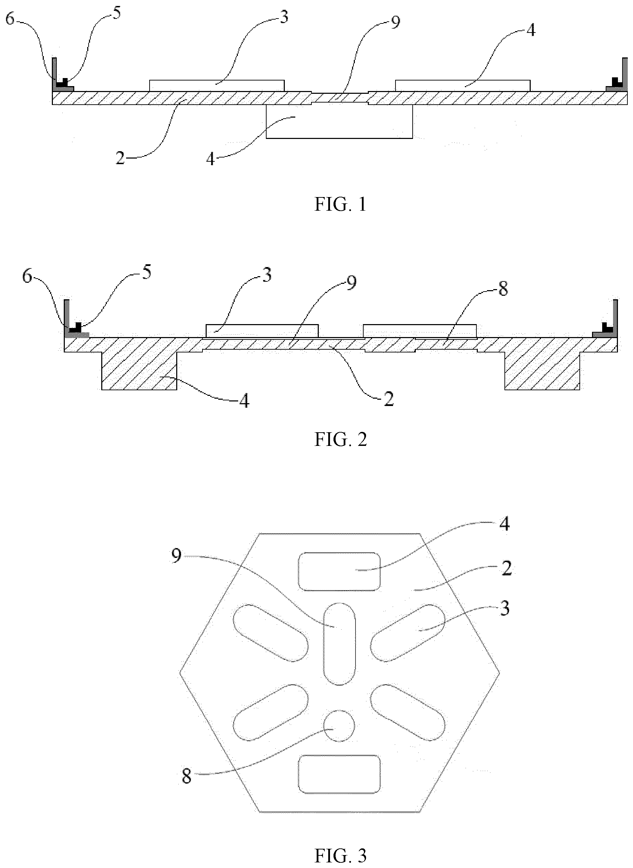

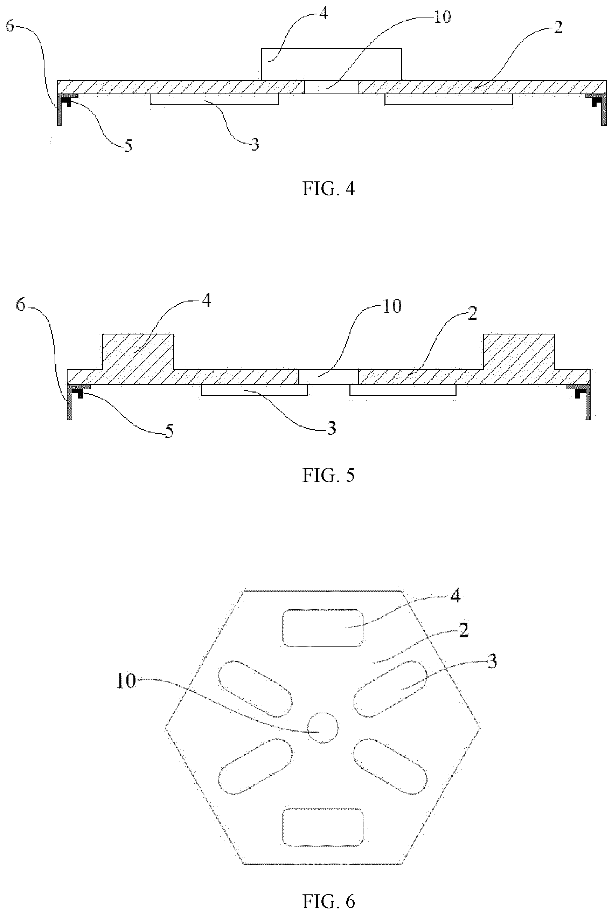

A battery and a battery module according to embodiments of the present disclosure are described below with reference to FIG. 1 to FIG. 13.

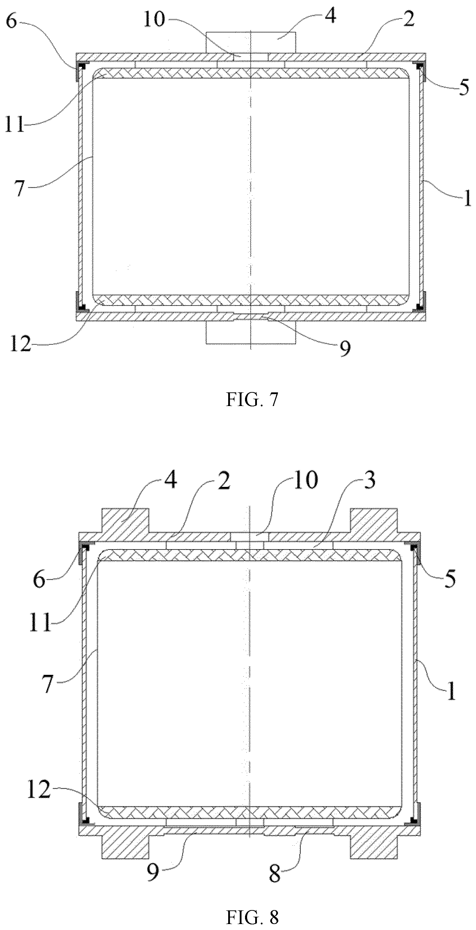

As illustrated in FIG. 7 and FIG. 8, a battery according to an embodiment of the present disclosure includes a housing 1 defining a receiving cavity configured to receive an electrode sheet of the battery. The housing 1 may be configured to have an open end and be closed at another end. It should be understood that the open end of the housing 1 may be configured to be any end of the housing 1, and a positive electrode and a negative electrode of the corresponding battery are arranged at a same end of the housing 1. The housing 1 may be configured to be open at two ends, and the positive electrode and the negative electrode of the corresponding battery may be disposed at two different ends of the housing 1.

The battery according to an embodiment of the present disclosure further includes an end cap 2 disposed on the housing 1 and closing the open end of the housing 1. That is, when the housing 1 is configured to be open at an end and closed at another end, one end cap 2 of the corresponding housing 1 is provided. When the housing 1 is configured to be open at two ends, two end caps 2 of the corresponding housing 1 are provided. In the present disclosure, the end cap 2 is provided with a first contact portion 3 at a side of the end cap 2 facing towards the receiving cavity. The first contact portion 3 extends towards the receiving cavity. The first contact portion 3 may be adapted to be electrically connected to the electrode sheet in the receiving cavity of the housing 1. The end cap 2 is provided with a second contact portion 4 at a side of the end cap 2 away from the receiving cavity. The second contact portion 4 extends away from the receiving cavity. The second contact portion 4 may be constructed as a pole of the battery. In addition, in the present disclosure, the first contact portion 3, the second contact portion 4, and the end cap 2 are constructed as an integral piece.

In the present disclosure, the first contact portion 3, the second contact portion 4, and the end cap 2 are constructed as the integral piece, such that the first contact portion 3 can be electrically connected to the electrode sheet to draw current to allow the end cap 2 to be directly charged. The second contact portion 4 may be constructed as the pole of the battery. Compared with the related art, there is no need to provide an insulating connection between a cover plate and the pole of the battery, simplifying the structure of the cover plate and a manufacturing process of the cover plate, and thus reducing an economic cost.

According to an embodiment of the present disclosure, an insulator is provided between the end cap 2 and the housing 1 to insulate the end cap 2 from the housing 1. Further, after the first contact portion 3 is connected to a positive tab 11 or a negative tab 12 of the battery, a current is drawn out to the end cap 2. Since the insulator is disposed between the end cap 2 and the housing 1, the current in the end cap 2 cannot be conducted to the housing 1, such that the housing 1 is insulated from the current, avoiding damage to the battery and a short circuit of the battery.

According to an embodiment of the present disclosure, the first contact portion 3 may be constructed to extend in a radial direction of the end cap 2. On the one hand, in the present disclosure, the first contact portion 3 is constructed to extend in the radial direction of the end cap 2, such that a contact area between the first contact portion 3 and a battery assembly in the receiving cavity of the housing 1 is increased, allowing conduction fluidity of the current to be better. On the other hand, the first contact portion 3 is constructed to extend in the radial direction of the end cap 2, such that the end cap 2 can have more uniform temperature distribution, and thus the battery can have a relatively long service life.

As illustrated in FIG. 1 to FIG. 6, according to an embodiment of the present disclosure, a plurality of first contact portions 3 is provided. The plurality of first contact portions 3 is provided on the end cap 2, such that a contact area between the first contact portion 3 and the tab can be made larger, the connection between the first contact portion 3 and the tab can be more reliable, and a resistance between the first contact portion 3 and the tab can be reduced. Furthermore, the plurality of first contact portions 3 enables the first contact portion 3, the second contact portion 4, and the end cap 2 to be constructed as the integral piece to be uniformly stressed. In this way, the end cap 2 as the integral piece can have good mechanical properties.

The first contact portion 3 of the present disclosure may be constructed to be arranged at intervals in a circumferential direction of the end cap 2, realizing uniform distribution of the temperature and the current. In a specific embodiment of the present disclosure, four first contact portions 3 are provided on one end cap 2. Projections of the four first contact portions 3 in a thickness direction of the end cap 2 are in a symmetrical pattern, and an angle between two adjacent ones of the fourth first contact portions 3 is 60° or 120°.

As illustrated in FIG. 7 and FIG. 8, according to an embodiment of the present disclosure, the housing 1 of the present disclosure can be constructed as a hexagonal prism. When the battery produces a gas during use, the battery may be uniformly deformed along six faces, avoiding severe deformation in a single direction and a single large face. In addition, six edges can also restrain the deformation of the faces to reduce deformation of the battery after use. The end cap 2 of the present disclosure correspondingly cooperates with the housing 1. An end surface of the end cap 2 facing towards the receiving cavity may be constructed into a hexagonal shape. When batteries in the hexagonal prism shape are arranged, a close fit can be formed among the batteries, avoiding waste of stacking spaces of the batteries, improving a space utilization rate during stacking, and thus increasing energy density of the batteries. In addition, it should be noted that in a specific embodiment of the present disclosure, a pole core 7 of the battery matches the housing 1 in the hexagonal prism shape. The pole core 7 may be constructed to be wound in a hexagonal shape, which can be effectively attached to an outline of the housing 1 to avoid space waste. The pole core 7 of the prismatic battery in the related art needs to be flattened after winding, causing wrinkles at a corner and affecting an interface state. Compared with the pole core in the related art, the hexagonal structure is adopted in the present disclosure and corners are gentle, ensuring a uniform interface.

In the present disclosure, an end of each of the plurality of first contact portions 3 is constructed to extend from a center of the end cap 2 towards an end of the end cap 2. In another embodiment, an end of each of the plurality of first contact portions 3 may be constructed to extend from the center of the end cap 2 towards a corner of the end cap 2. The first contact portion 3 can guide a force or a temperature to the side or corner of the end cap 2 to avoid a local excessive force or an excessive temperature, and thus avoid damage to the first contact portion 3 and the end cap 2.

As illustrated in FIG. 1 to FIG. 6, according to an embodiment of the present disclosure, a cross section of each of the plurality of first contact portions 3 may be constructed as an oblong shape. That is, a projection of the first contact portion 3 in the thickness direction of the end cap 2 is in the oblong shape. The first contact portion 3 is constructed as be in the oblong shape, such that an edge and a corner of the first contact portion 3 can be smooth and rounded, and thus the electrode sheet is unlikely to be punctured. In this way, a short circuit of the battery due to the first contact portion 3 is avoided, and safety of the battery is increased.

According to an embodiment of the present disclosure, a projection of the first contact portion 3 in the thickness direction of the end cap 2 interlaces with a projection of the second contact portion 4 in the thickness direction of the end cap 2. It should be understood that in the present disclosure, the first contact portion 3 and the second contact portion 4 are located at different sides of the end cap 2 in the thickness direction of the end cap 2. The first contact portion 3 interlaces with the second contact portion 4 on the end cap 2, avoiding a large local pressure at a portion of the end cap 2 on which the first contact portion 3 or the second contact portion 4 is located, and allowing the integral piece composed of the first contact portion 3, the second contact portion 4, and the end cap 2 to be reasonably stressed.

According to an embodiment of the present disclosure, a plurality of second contact portions 4 of the present disclosure is provided. At least one second contact portion of the plurality of second contact portions 4 may be adapted to be engaged and connected with an electrical connector. In an embodiment of the present disclosure, the electrical connector may include a connection sheet and a flexible circuit board. When the at least one second contact portion 4 is connected to the connection sheet and the flexible circuit board, the remaining ones of the plurality of second contact portions 4 that are not connected to the electrical connector may be connected to the electrical connector as subsequent battery cell replacement. The plurality of second contact portions 4 is provided, such that the integral piece constituted by the first contact portion 3, the second contact portion 4, and the end cap 2 can be recycled for multiple times, increasing a service life of the integral piece and reducing an economic cost of the integral piece.

As illustrated in FIG. 3, according to an embodiment of the present disclosure, the end cap 2 has a first communication hole extending through the end cap 2 in the thickness direction of the end cap 2. An on-off valve 8 is provided in the first communication hole. In a specific embodiment of the present disclosure, the first communication hole may be disposed in a middle portion of the end cap 2. That is, the on-off valve 8 may be disposed in the middle portion of the end cap 2, and the on-off valve 8 is avoided from the first contact portion 3 disposed on the end cap 2. The on-off valve 8 may be adapted to bring the receiving cavity into communication with an external environment when a pressure in the receiving cavity is greater than a first predetermined pressure. That is, when an internal air pressure of the battery exceeds the first predetermined pressure, the on-off valve 8 actively opens to release the internal air pressure of the battery to decompress the battery, improving the safety of the battery. The on-off valve 8 in the present disclosure may further be adapted to close the first communication hole when the pressure in the receiving cavity is smaller than or equal to the first predetermined pressure. It should be understood that when the battery is decompressed to the first predetermined pressure, the on-off valve 8 can be automatically closed and close the first communication hole on the end cap 2, such that a gas in the air cannot enter the battery to prevent accelerate self-discharge of the battery, increasing the service life of the battery.

As illustrated in FIG 2 to FIG. 6, according to an embodiment of the present disclosure, the end cap 2 has a second communication hole extending through the end cap 2 in a thickness direction of the end cap 2. An explosion-proof valve 9 is provided in the second communication hole. In a specific embodiment of the present disclosure, the second communication hole may be disposed in the middle portion of the end cap 2 and adjacent to the first communication hole. That is, the explosion-proof valve 9 may be disposed in the middle portion of the end cap 2 and adjacent to the on-off valve 8. The explosion-proof valve 9 is avoided from the first contact portion 3 and the first communication hole that are disposed on the end cap 2. The explosion-proof valve 9 in the present disclosure may be adapted to bring the receiving cavity into communication with the external environment when a pressure in the receiving cavity reaches a second predetermined pressure. It should be understood that when the internal air pressure of the battery rises sharply, the explosion-proof valve 9 can be opened to quickly relieve the internal air pressure to prevent explosion from causing battery safety accidents. In addition, it should be noted that the middle portion of the end cap 2 in the present disclosure may further have a liquid injection hole 10 for injecting an electrolyte into an interior of the battery cell during manufacturing.

According to an embodiment of the present disclosure, the insulator of the present disclosure includes a first insulation member 5 and a second insulation member 6. The first insulation member 5 may be disposed at the open end of the housing 1. The first insulation member 5 is at least partially located at an inner circumferential wall of the receiving cavity. It should be understood that the first insulation member 5 can avoid contact between the tab in the receiving cavity and the housing 1 of the battery. In a specific embodiment of the present disclosure, the first insulation member 5 may be a plastic member. The second insulation member 6 is disposed between the first insulation member 5 and the end cap 2. The second insulation member 6 is at least partially located at an outer circumferential wall of the housing 1. It should be understood that the second insulation member 6 is insulated from and connected to the open end of the housing 1, and closes the receiving cavity to form a sealed cavity. In a specific embodiment of the present disclosure, the second insulation member 6 may be an aluminum-plastic film. Further, the open end of the housing 1 is abutted with the plastic component during assembly. The aluminum-plastic film is insulated from and connected to the open end of the housing 1 to form the sealed cavity.

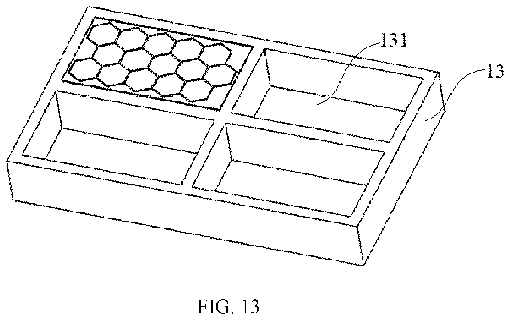

As illustrated in FIG. 13, a battery module according to an embodiment of the present disclosure includes a battery and a casing 13. The battery according to the present disclosure may be constructed as the battery according to any one of the above embodiments. The casing 13 has a battery receiving cavity 131. The battery may be disposed in the battery receiving cavity 131. The battery receiving cavity 131 can maintain operation safety of the battery and provide protection. In the driving process of the vehicle, the casing 13 can provide protection against collisions, water, fire, and dust, better maintaining performance stability of the entire automotive battery. The casing 13 can protect the battery from collision and insulate and waterproof the battery.

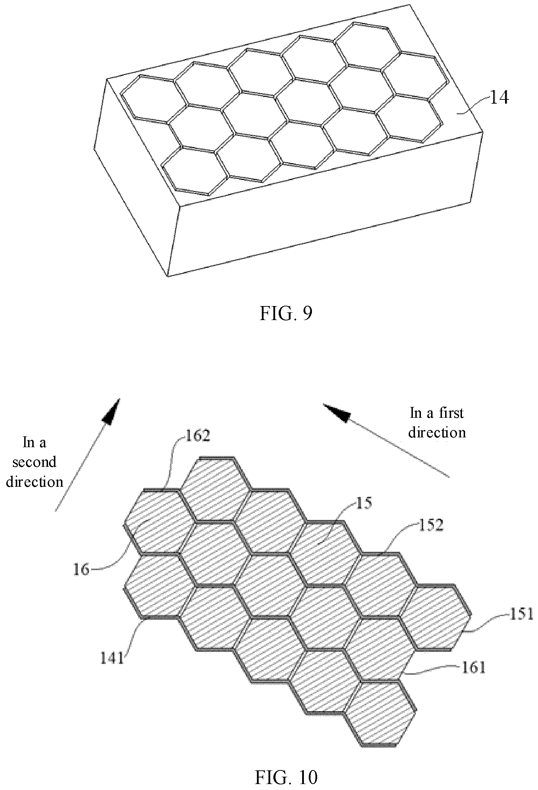

As illustrated in FIG. 9 and FIG. 10, the battery module according to an embodiment of the present disclosure further includes a water-cooling plate 14 configured to perform heat dissipation on the battery. The water-cooling plate 14 of the present disclosure may be configured to be attached to the battery. The water-cooling plate 14 has a cooling channel 141 adapted to circulate a cooling medium. It should be understood that the cooling medium flows in the cooling channel 141 to take away heat generated in a battery system and dissipate the heat to the external environment, realizing heat dissipation and cooling of the battery module. In addition, the cooling channel 141 in the present disclosure may be constructed as a conformal structure as desired.

As illustrated in FIG. 10, according to an embodiment of the present disclosure, the battery includes a first battery 15. A plurality of first batteries 15 may be provided. The plurality of first batteries 15 is sequentially arranged in a first direction to form a first battery 15 group. The plurality of first batteries 15 has first attachment surfaces 151 directly facing towards each other in the first direction. Two adjacent first batteries 15 of the plurality of first batteries 15 are tightly attached to each other with the first attachment surfaces 151. In addition, a second attachment surface 152 is formed between two first attachment surfaces 151 of each of the plurality of first batteries 15. In a specific embodiment of the present disclosure, each of the hexagonal prism-shaped first batteries 15 has two first attachment surfaces 151 and four second attachment surfaces 152.

The battery in the present disclosure further includes a second battery 16. A plurality of second batteries 16 may be provided. The plurality of second batteries 16 is sequentially arranged in the first direction to form a second battery 16 group. It should be understood that the second battery 16 group is parallel to the first battery 15 group. Similarly, the plurality of second batteries 16 has third attachment surfaces 161 directly facing each other in the first direction. Two adjacent second batteries 16 of the plurality of second batteries 16 are tightly attached to each other with the third attachment surfaces 161. In addition, a fourth attachment surface 162 is formed between two third attachment surfaces 161 of each of the plurality of second batteries 16. The fourth attachment surface 162 is attached to the second attachment surface 152 in a second direction. In a specific embodiment of the present disclosure, each of the hexagonal prism-shaped second batteries 16 has two third attachment surfaces 161 and four second attachment surfaces 162.

Further, in the first direction of the present disclosure, batteries can be tightly attached to each other with the first attachment surfaces 151 or the third attachment surfaces 161. In the second direction, the batteries can be attached to each other with the second attachment surface 152 and the fourth attachment surface 162, such that all the batteries can be arranged in an attached manner, effectively improving the space utilization rate and increasing the energy density of the entire battery.

As illustrated in FIG 9 to FIG. 13, according to an embodiment of the present disclosure, in the present disclosure, the water-cooling plate 14 may be disposed between the first battery 15 group and the second battery 16 group and extends in the first direction. In a specific embodiment of the present disclosure, a cross section of the water-cooled plate 14 in the first direction is constructed as a Z-shaped section. A side of the water-cooling plate 14 in a thickness direction of the water-cooling plate 14 may be attached to the second attachment surface 152. Another side of the water-cooling plate 14 in the thickness direction of the water-cooling plate 14 may be attached to the fourth attachment surface 162. In the present disclosure, the water-cooling plate 14 may be disposed at an end of the battery, and the cooling channel 141 in the water-cooling plate 14 may be constructed to extend in the first direction and located between the second attachment surface 152 and the fourth attachment surface 162. In a specific embodiment of the present disclosure, the cooling channel 141 is constructed to be in a Z shape. A side of the cooling channel 141 in a thickness direction of the cooling channel 141 may be attached to the second attachment surface 152, and another side of the cooling channel 141 in the thickness direction of the cooling channel 141 may be attached to the fourth attachment surface 162.

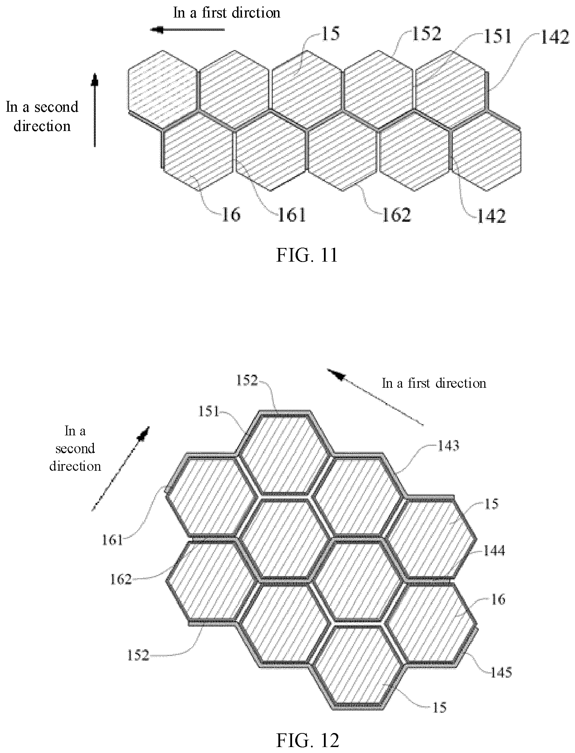

As illustrated in FIG. 11, according to another embodiment of the present disclosure, a branch water-cooling plate 142 is formed at the water-cooling plate 14, and the branch water-cooling plate 142 in the present disclosure may be adapted to extend only towards the first battery group. The branch water-cooling plate 142 in the present disclosure may further be adapted to extend only towards the second battery group. The branch water-cooling plate 142 of the present disclosure may further be adapted to extend towards both the first battery group and the second battery group. The branch water-cooling plate 142 is disposed between two adjacent first batteries of the plurality of first batteries 15 and/or between two adjacent second batteries of the plurality of second batteries 16. The branch water-cooling plate 142 can dissipate heat on a surface between the two adjacent first batteries 15 in the first battery group, and can also dissipate heat on a surface between the two adjacent second batteries 16 in the second battery group. A heat dissipation effect of the water-cooling plate 14 on a battery cell is further improved with the branch water-cooling plate 142, and thus a heat dissipation efficiency is improved.

As illustrated in FIG. 12, according to yet another embodiment of the present disclosure, the water-cooling plate 14 may be further constructed to include a first water-cooling plate 143, a second water-cooling plate 144, and a third water-cooling plate 145. The first water-cooling plate 143 of the present disclosure is disposed on an outer periphery of the first battery group and an outer periphery of the second battery group. The first water-cooling plate 143 has a segment attached to the second attachment surface 152 of the first battery 15 in the first direction, and another segment attached to the first attachment surfaces 151 of the first battery 15 and the third attachment surfaces 161 and the fourth attachment surface 162 of the second battery 16 in the second direction.

The second water-cooling plate 144 of the present disclosure is disposed between the first battery group and the second battery group. The second water-cooling plate 144 has a first segment attached to the second attachment surface 152 of the first battery 15 and the fourth attachment surface 162 of the second battery 16 in the first direction, a second segment attached to the third attachment surfaces 162 of the second battery 16 in the second direction, and a third segment parallel to the first segment of the second water-cooling plate 144. Similarly, the third segment of the second water-cooling plate 144 is attached to the second attachment surface 152 of the first battery 15 and the fourth attachment surface 162 of the second battery 16 in the first direction. The first battery 15 attached to the third segment of the second water-cooling plate 144 and the first battery 15 attached to the first segment of the second water-cooling plate 144 belong to adjacent first battery groups, respectively.

The third water-cooling plate 143 of the present disclosure is disposed on the outer periphery of the first battery group and the outer periphery of the second battery group. A projection of the third water-cooling plate 145 in a height direction of the battery is in a centrally symmetric shape with respect to a projection of the first water-cooling plate 143 in the height direction of the battery. That is, the third water-cooling plate 145 has a segment attached to the second attachment surface 152 of the first battery 15 in the first direction, and another segment attached to the first attachment surfaces 151 of the first battery 15 and attached to the third attachment surfaces 161 and the fourth attachment surface 162 of the second battery 16 in the second direction. Another end of the first water-cooling plate 14 and another end of the third water-cooling plate 14 are attached to two ends of a same second battery group in the first direction, respectively. The first water-cooling plate 143, the second water-cooling plate 144, and the third water-cooling plate 145 are provided, such that there is cooling arrangement among the battery groups and outer peripheries of the battery groups, increasing a cooling effect of the first battery group and the second battery group.

The present disclosure further relates to a fixation assembly for fixing the battery. The fixation assembly includes an upper fixation plate and a lower fixation plate. Both the upper fixation plate and the lower fixation plate may have recesses matching a shape of the battery. A plurality of battery cells can be vertically placed on a recess of the lower fixation plate. A recess of the upper fixation plate can be buckled above the battery. The upper fixation plate and the lower fixation plate can be connected to each other by bolts to fix the battery to form a battery module. With the fixation assembly, components such as end plates and side plates of conventional battery modules can be omitted, reducing a weight of the battery module and improving the space utilization rate. Moreover, there is no need to connect and fix the batteries with adhesive tapes, improving energy density of the battery module and increasing vehicle's endurance.

A vehicle according to the present disclosure is briefly described below.

The vehicle according to the present disclosure is provided with the battery or the battery module according to any one of the above embodiments. Therefore, the structure and the processing technology between the cover plate and the pole of the battery in the vehicle are simple, reducing the economic cost. In addition, the battery has a high spatial utilization rate when stacked and high energy density. Furthermore, the housing 1 of the battery has small deformation and uniform deformation, providing good user experience.

In the description of the present disclosure, it should be understood that, the orientation or the position indicated by terms such as "center," "longitudinal," "lateral," "length," "width," "thickness," "over," "below," "front," "rear," "left," "right," "vertical," "horizontal," "top," "bottom," "inner," "outer," "clockwise," "anticlockwise," "axial," "radial," and "circumferential" should be construed to refer to the orientation or the position as shown in the drawings, and is only for the convenience of describing the present disclosure and simplifying the description, rather than indicating or implying that the pointed device or element must have a specific orientation, or be constructed and operated in a specific orientation, and therefore cannot be understood as limitation of the present disclosure.

**In** addition, terms such as "first" and "second" are only used for descriptive purposes, and cannot be understood as indicating or implying relative importance or implicitly indicating the number of indicated technical features. Therefore, the features associated with "first" and "second" may explicitly or implicitly include one or more of the features. In the description of the present disclosure, "a plurality of" means at least two, unless otherwise specifically defined.

**In** the present disclosure, unless otherwise clearly specified and limited, terms, such as "mounting," "connect," "connect to," and "fixed to,", should be understood in a broad sense. For example, it may be a fixed connection or a detachable connection or connection as one piece; mechanical connection or electrical connection; direct connection or indirect connection through an intermediate; internal communication of two components or the interaction relationship between two components. For those skilled in the art, specific meanings of the above terms in the present disclosure can be understood according to specific circumstances.

**In** the present disclosure, unless expressly stipulated and defined otherwise, the first feature "on" or "under" the second feature may mean that the first feature is in direct contact with the second feature or the first and second features are in indirect contact through an intermediate. In addition, the first feature "above" the second feature means that the first feature is directly above or obliquely above the second feature, or simply means that the level of the first feature is higher than that of the second feature. The first feature "below" the second feature may mean that the first feature is directly below or obliquely below the second feature, or simply mean that the level of the first feature is smaller than that of the second feature.

**In** the present disclosure, the description with reference to the terms "an embodiment," "some embodiments," "an example," "a specific example," or "some examples", etc., means that specific features, structures, materials, or characteristics described in conjunction with the embodiment(s) or example(s) are included in at least one embodiment or example of the present disclosure. In the present disclosure, any illustrative reference of the above terms does not necessarily refer to the same embodiment(s) or example(s). Further, the particular features, structures, materials, or characteristics may be combined in any suitable manner in any one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are exemplary and should not be construed as limiting the present disclosure. Those skilled in the art can make changes, modifications, substitutions, and alternations to the above-mentioned embodiments within the scope of the present disclosure.

## Claims

1. A battery, comprising:
a housing defining a receiving cavity configured to receive an electrode sheet, the housing having at least one open end; and
an end cap disposed on the housing and closing the at least one open end of the housing,
wherein the end cap is provided with a first contact portion at a side of the end cap facing towards the receiving cavity and a second contact portion at a side of the end cap away from the receiving cavity, the first contact portion extending towards the receiving cavity, and the second contact portion extending away from the receiving cavity, wherein:
the first contact portion is adapted to be electrically connected to the electrode sheet;
the second contact portion is constructed as a pole of the battery; and
the first contact portion, the second contact portion, and the end cap are constructed as an integral piece.

2. The battery according to claim 1, wherein an insulator is provided between the end cap and the housing to insulate the end cap from the housing.

3. The battery according to claim 2, wherein the first contact portion extends in a radial direction of the end cap.

4. The battery according to claim 3, wherein a plurality of first contact portions is provided, the plurality of first contact portions being arranged at intervals in a circumferential direction of the end cap.

5. The battery according to claim 4, wherein the housing is constructed as a hexagonal prism;
an end surface of the end cap facing towards the receiving cavity is constructed into a hexagonal shape; and
an end of each of the plurality of first contact portions extends from a center of the end cap towards an edge or a corner of the end cap.

6. The battery according to claim 5, wherein a cross section of each of the plurality of first contact portions is constructed as an oblong shape.

7. The battery according to any one of claims 1 to 6, wherein a projection of the first contact portion in a thickness direction of the end cap interlaces with a projection of the second contact portion in the thickness direction of the end cap.

8. The battery according to claim 7, wherein a plurality of second contact portions is provided, at least one of the plurality of second contact portions being adapted to be engaged and connected with an electrical connector.

9. The battery according to any one of claims 3 to 8, wherein the end cap has a first communication hole extending through the end cap in a thickness direction of the end cap,
wherein an on-off valve is provided in the first communication hole, wherein the on-off valve is adapted to bring the receiving cavity into communication with an external environment when a pressure in the receiving cavity is greater than a first predetermined pressure, and to close the first communication hole when the pressure in the receiving cavity is smaller than or equal to the first predetermined pressure.

10. The battery according to any one of claims 3 to 9, wherein the end cap has a second communication hole extending through the end cap in a thickness direction of the end cap,
wherein an explosion-proof valve is provided in the second communication hole, wherein the explosion-proof valve is adapted to bring the receiving cavity into communication with an external environment when a pressure in the receiving cavity reaches a second predetermined pressure.

11. The battery according to any one of claims 2 to 10, wherein the insulator comprises:
a first insulation member disposed at the at least one open end of the housing, the first insulation member being at least partially located at an inner circumferential wall of the receiving cavity; and
a second insulation member disposed between the first insulation member and the end cap, the second insulation member being at least partially located at an outer circumferential wall of the housing.

12. A battery module, comprising:
a battery constructed as the battery according to any one of claims 1 to 11; and
a casing having a battery receiving cavity, the battery being disposed in the battery receiving cavity.

13. The battery module according to claim 12, further comprising:
a water-cooling plate attached to the battery, the water-cooling plate having a cooling channel adapted to circulate a cooling medium.

14. The battery module according to claim 13, wherein the battery comprises:
a plurality of first batteries sequentially arranged in a first direction to form a first battery group, wherein the plurality of first batteries has first attachment surfaces directly facing towards each other in the first direction, wherein two adjacent first batteries of the plurality of first batteries are attached to each other with the first attachment surfaces, and wherein a second attachment surface is formed between two first attachment surfaces of each of the plurality of first batteries; and
a plurality of second batteries sequentially arranged in the first direction to form a second battery group, wherein the plurality of second batteries has third attachment surfaces directly facing towards each other in the first direction, wherein two adjacent second batteries of the plurality of second batteries are attached to each other with the third attachment surfaces, and wherein a fourth attachment surface is formed between two third attachment surfaces of each of the plurality of second batteries, the fourth attachment surface being attached to the second attachment surface in a second direction.

15. The battery module according to claim 14, wherein the water-cooling plate is disposed between the first battery group and the second battery group and extends in the first direction, the water-cooling plate being attached to each of the second attachment surface and the fourth attachment surface; or
the water-cooling plate is disposed at an end of the battery, the cooling channel in the water-cooling plate extending in the first direction and being located between the second attachment surface and the fourth attachment surface.

16. A vehicle, comprising the battery module according to any one of claims 12 to 15.
